(19) 

**Europäisches Patentamt**
**European Patent Office**
**Office européen des brevets**

(11) **EP 4 703 659 A1**

(12) **EUROPÄISCHE PATENTANMELDUNG**

(43) Veröffentlichungstag:
**04.03.2026 Patentblatt 2026/10**

(51) Internationale Patentklassifikation (IPC):
**F25B 49/02** (2006.01)

(21) Anmeldenummer: **25190055.1**

(22) Anmeldetag: **17.07.2025**

(52) Gemeinsame Patentklassifikation (CPC):
**F25B 49/02;** F25B 2700/171; F25B 2700/1931;
F25B 2700/1933; F25B 2700/197;
F25B 2700/21151; F25B 2700/21152;
F25B 2700/2117

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **26.08.2024 DE 102024124251**

(71) Anmelder: **AUDI AG**
**85057 Ingolstadt (DE)**

(72) Erfinder:
• **Cherchi, Julian**
**85131 Pollenfeld (DE)**
• **Parzinger, Stephan**
**85123 Karlskron (DE)**

(54) **VERFAHREN ZUM BETREIBEN EINER KÄLTEANLAGE MIT WÄRMEPUMPENFUNKTION FÜR EIN KRAFTFAHRZEUG BASIEREND AUF DEM KÄLTEMITTELMASSENSTROM SOWIE KÄLTEANLAGE MIT STEUEREINHEIT ZUR DURCHFÜHRUNG DES VERFAHRENS**

(57) Beschrieben wird ein Verfahren (500) zum Betreiben einer Kälteanlage (10) mit Wärmepumpenfunktion für ein Kraftfahrzeug (200) mit zumindest teilweise elektrischem Antrieb, wobei die Kälteanlage (10) aufweist: einen Kältemittelverdichter (12); einen ersten Wärmeübertrager (18); wenigstens einen weiteren Wärmeübertrager (22; 28;26); eine niederdruckseitig stromaufwärts von dem Kältemittelverdichter (12) angeordnete Sensorvorrichtung (pT2) zur Erfassung von einem ersten Kältemitteldruck und/oder einer ersten Kältemitteltemperatur; eine hochdruckseitig stromabwärts von dem Kältemittelverdichter (12) angeordnete Sensorvorrichtung (pT1) zur Erfassung von einem zweiten Kältemitteldruck und/oder einer zweiten Kältemitteltemperatur, wobei das Verfahren folgende Schritte aufweist: Erfassen (S501) des ersten Kältemitteldrucks oder/und der ersten Kältemitteltemperatur; Erfassen (S502) des zweiten Kältemitteldrucks oder/und der zweiten Kältemitteltemperatur; Erfassen (S503) einer Drehzahl des Kältemittelverdichters; Bestimmen (S504) eines Kältemittelliefergrads basierend auf dem Druckverhältnis von ersten Kältemitteldruck und zweiten Kältemitteldruck und der Drehzahl des Kältemittelverdichters; Bestimmen (S505) eines Kältemittelmassenstroms basierend auf dem Kältemittelliefergrad. Ferner wird eine Kälteanlage (10) mit Steuereinheit (50) zur Durchführung des Verfahrens beschrieben.

**Fig. 2**

500

EP 4 703 659 A1

**Beschreibung**

Die Erfindung betrifft ein Verfahren zum Betreiben einer Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordneten Sensorvorrichtung zur Erfassung von einem ersten Kältemitteldruck und/oder einer ersten Kältemitteltemperatur; einer hochdruckseitig stromabwärts von dem Kältemittelverdichter angeordneten Sensorvorrichtung zur Erfassung von einem zweiten Kältemitteldruck und/oder einer zweiten Kältemitteltemperatur.

Aus dem Stand der Technik sind verschiedene Verfahren zum Betrieb von Kälteanlagen von Kraftfahrzeugen bekannt. Es wird hierzu beispielsweise auf folgende Druckschriften hingewiesen: DE 10 2021 132 800 A1, DE 44 322 72 A1, DE 10 2012 222 594 A1, DE 10 2010 061 465 A1.

Komplexe Kältemittelkreisläufe insbesondere in elektrisch angetriebenen Kraftfahrzeugen weisen eine hohe Anzahl an Verschaltungsvariationen auf. Diese Verschaltungen, die auch als Betriebsmodi bezeichnet werden könne, bedingen unterschiedliche Lastsituationen und dadurch unterschiedliche Bedarfe an Kältemittelmassenströmen. Eine Erhöhung eines Kältemittelmassenstroms, insbesondere mittels Erhöhen einer Drehzahl des Kältemittelverdichters, kann unter bestimmten Umständen zu einer Verringerung der Effizienz führen bei gleichzeitiger Nichterhöhung der Kälteleistung. Dies wird insbesondere verursacht durch übermäßige Druckverluste in den Bauteilen auf der Niederdruckseite bzw. Saugseite der Kälteanlage. Ferner weisen (komplexere) Kälteanlagen mit Wärmepumpenfunktion in der Regel einen gesonderten Temperatursensor nach dem Verdampfer auf, was zu erhöhten Kosten und Bauraumbedarf führt.

Die der Erfindung zu Grunde liegende Aufgabe wird darin gesehen, ein Verfahren zum Betreiben einer Kälteanlage anzugeben, bei dem die obigen Nachteile vermieden werden können.

Diese Aufgabe wird gelöst durch ein Verfahren und eine Kälteanlage mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Verfahren zum Betreiben einer Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordnete Sensorvorrichtung zur Erfassung von einem ersten Kältemitteldruck und/oder einer ersten Kältemitteltemperatur; eine hochdruckseitig stromabwärts von dem Kältemittelverdichter angeordneten Sensorvorrichtung zur Erfassung von einem zweiten Kältemitteldruck und/oder einer zweiten Kältemitteltemperatur, wobei das Verfahren folgende Schritte aufweist:

Erfassen des ersten Kältemitteldrucks oder/und der ersten Kältemitteltemperatur;
Erfassen des zweiten Kältemitteldrucks oder/und der zweiten Kältemitteltemperatur;
Erfassen einer Drehzahl des Kältemittelverdichters;
Bestimmen eines Kältemittelliefergrads basierend auf dem Druckverhältnis von ersten Kältemitteldruck und zweiten Kältemitteldruck und der Drehzahl des Kältemittelverdichters;
Bestimmen eines Kältemittelmassenstroms basierend auf dem Kältemittelliefergrad.

Das Verfahren kann ferner den Schritt aufweisen: Bestimmen einer niederdruckseitigen Dichte des Kältemittels in einem überhitzten Bereich basierend auf dem zweiten Kältemitteldruck und der zweiten Kältemitteltemperatur.

Weiter kann das Verfahren den Schritt umfassen: Bestimmen einer niederdruckseitigen Dichte des Kältemittels in einem Nassdampf-Bereich basierend auf dem zweiten Kältemitteldruck.

Bei dem Verfahren kann für jeden Betriebszustand der Kälteanlage, insbesondere Kühlbetrieb, Heizbetrieb, Reheat-Betrieb, ein zugeordneter maximaler Kältemittelmassenstrom verwendet werden und die Drehzahl des Kältemittelverdichters in dem betreffenden Betriebszustand in Abhängigkeit von dem zugeordneten maximalen Kältemittelmassenstrom begrenzt werden.

Somit kann mittels des vorgeschlagenen Verfahrens eine verschaltungsabhängige bzw. vom Betriebsmodus abhängige Gesamtmassenstromlimitierung erreicht werden, wobei insbesondere üblicherweise in der Kälteanlage vorhandene Sensorik genutzt wird.

Der Kältemittelmassenstrom kann beispielsweise wie folgt berechnet werden:

$$\dot{m}_{KM} = \rho_{KM} \cdot \lambda_{KV} \cdot V_{hub} \cdot n_{KV}$$

mit

| | |
|---|---|
| $\dot{m}_{KM}$ | Kältemittelmassenstrom |
| $\rho_{KM}$ | Dichte des Kältemittels |
| $A_{KV}$ | Liefergrad des Kältemittelverdichters |
| $V_{hub}$ | Hubvolumen des Kältemittelverdichters |
| $n_{KV}$ | Drehzahl des Kältemittelverdichters |

Vorgeschlagen wird ferner eine Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordnete Sensorvorrichtung zur Erfassung von einem ersten Kältemitteldruck und/oder einer ersten Kältemitteltemperatur; eine hochdruckseitig stromabwärts von dem Kältemittelverdichter angeordnete Sensorvorrichtung zur Erfassung von einem zweiten Kältemitteldruck und/oder einer zweiten Kältemitteltemperatur; und eine Steuereinheit, die dazu eingerichtet ist, das oben beschriebene Verfahren durchzuführen.

Ein Kraftfahrzeug mit zumindest teilweise elektrischem Antrieb, insbesondere auch ein reines Elektrofahrzeug, kann mit einer oben beschriebenen Kälteanlage ausgeführt sein, die insbesondere gemäß dem oben beschriebenen Verfahren betreibbar ist.

Weitere Vorteile und Einzelheiten der Erfindung ergeben sich aus der nachfolgenden Beschreibung von Ausführungsformen unter Bezugnahme auf die Figuren. Dabei zeigt:

Fig. 1　　eine vereinfachte und schematische Darstellung einer Kälteanlage eines Kraftfahrzeugs;

Fig. 2　　eine vereinfachte Darstellung eines Verfahrens zum Betreiben einer Kälteanlage.

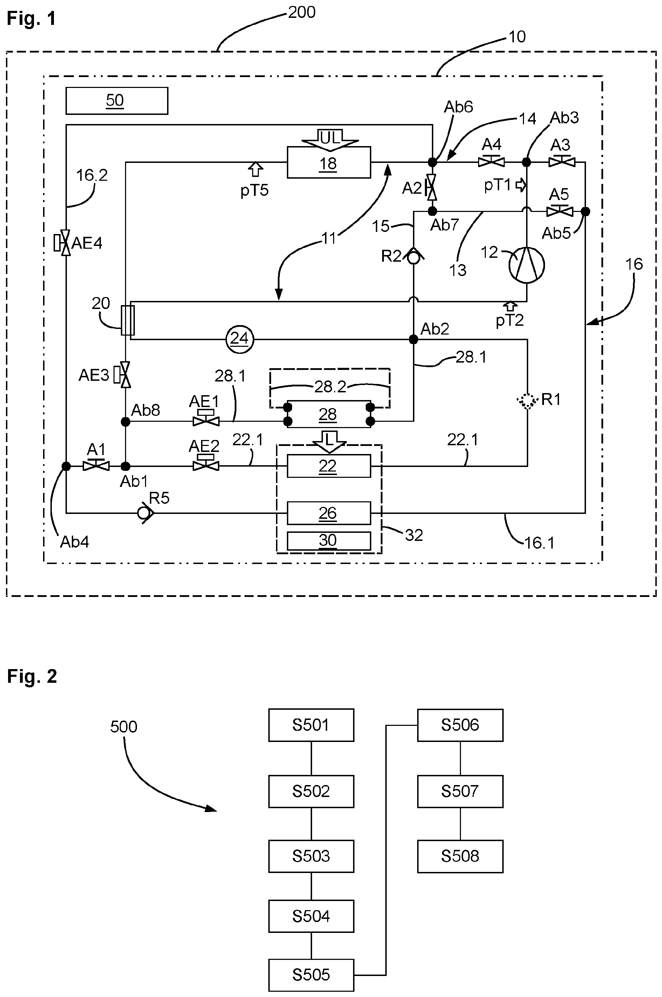

In Fig. 1 ist eine Ausführungsform einer Kälteanlage 10 für ein Kraftfahrzeug schematisch und vereinfacht dargestellt. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann. Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 18 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

Die Kälteanlage 10 weist eine niederdruckseitig stromaufwärts von dem Kältemittelverdichter 12 angeordnete Sensorvorrichtung pT2 zur Erfassung von einem ersten Kältemitteldruck und/oder einer ersten Kältemitteltemperatur auf. Ferner weist die Kälteanlage 10 eine hochdruckseitig stromabwärts von dem Kältemittelverdichter 12 angeordnete Sensorvorrichtung pT1 zur Erfassung von einem zweiten Kältemitteldruck und/oder einer zweiten Kältemitteltemperatur.

Die hier beispielhaft dargestellte Kälteanlage 10 mit Wärmepumpenfunktion ist insbesondere für ein Kraftfahrzeug 200, das hier vereinfacht als gestricheltes Rechteck dargestellt ist, mit zumindest teilweise elektrischem Antrieb vorgesehen.

In der Fig. 1 sind ferner optionale Rückschlagventile Rn (n = ganze Zahl) ersichtlich. Ferner kann die Kälteanlage auch weitere, hier nicht dargestellte Sensorvorrichtungen aufweisen.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpenbetriebs strömt das mittels des Kältemittelverdichters 12 verdichtete Kältemittel über das geöffnete Absperrventil A3 in das Heizregister 26. Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1. Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister 26. Anschließend wird es über das geöffnete Absperrventil A1 mittels des Expansionsventils AE3 in den äußeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw.- Reheat-Betrieb wird der in den Fahrzeuginnenraum zugeführte Zuluftstrom L mittels des Verdampfers 22 zunächst gekühlt und damit entfeuchtet. Mit der auf das Kältemittel durch Verdampfung und Entfeuchtung übertragenen Wärme sowie der dem Kältemittel über den Verdichter 12 zugeführten Wärme kann der Zuluftstrom L mittels des Heizregisters 26 vollständig oder zumindest teilweise wieder erwärmt werden.

In Fig. 2 ist vereinfacht ein Verfahren 500 zum Betreiben einer oben beschriebenen Kälteanlage 10 gezeigt, wobei das Verfahren 500 insbesondere folgende Schritte aufweist.

Gemäß einem Schritt S501 erfolgt ein Erfassen des ersten Kältemitteldrucks oder/und der ersten Kältemitteltemperatur mittels der Sensorvorrichtung pT2.

Gemäß einem Schritt S502 erfolgt ein Erfassen des zweiten Kältemitteldrucks oder/und der zweiten Kältemitteltemperatur mittels der Sensorvorrichtung pT1.

In einem Schritt S503 wird eine Drehzahl des Kältemittelverdichters 12 erfasst.

Gemäß einem Schritt S504 erfolgt ein Bestimmen eines Kältemittelliefergrads basierend auf dem Druckverhältnis von ersten Kältemitteldruck und zweiten Kältemitteldruck und der Drehzahl des Kältemittelverdichters.

Gemäß einem Schritt S505 erfolgt ein Bestimmen eines Kältemittelmassenstroms basierend auf dem in S504 bestimmten Kältemittelliefergrad.

Gemäß einem optionalen Schritt S506 erfolgt ein Bestimmen einer niederdruckseitigen Dichte des Kältemittels in einem überhitzten Bereich basierend auf dem in S502 erfassten zweiten Kältemitteldruck und der zweiten Kältemitteltemperatur.

Gemäß einem weiteren optionalen Schritt S507 erfolgt ein Bestimmen einer niederdruckseitigen Dichte des Kältemittels in einem Nassdampf-Bereich basierend auf dem in S502 bestimmten zweiten Kältemitteldruck.

Bei dem Verfahren 500 kann für jeden der oben beschriebenen Betriebszustand der Kälteanlage 10, insbesondere Kühlbetrieb, Heizbetrieb, Reheat-Betrieb, ein zugeordneter maximaler Kältemittelmassenstrom verwendet werden, so dass gemäß einem Schritt S508 die Drehzahl des Kältemittelverdichters in dem betreffenden Betriebszustand in Abhängigkeit von dem zugeordneten maximalen Kältemittelmassenstrom begrenzt wird.

Es wird darauf hingewiesen, dass in der Fig. 2 die beschriebenen Schritte des Verfahrens 500 vereinfacht als Abfolge dargestellt sind, auch wenn diese Schritte auch (zeitlich) parallel zueinander oder sogar gleichzeitig ausgeführt werden können.

Zur Durchführung des oben beschriebenen Verfahrens 500 kann die Kälteanlage 10 eine Steuereinheit 50 aufweisen.

**Patentansprüche**

1. Verfahren (500) zum Betreiben einer Kälteanlage (10) mit Wärmepumpenfunktion für ein Kraftfahrzeug (200) mit zumindest teilweise elektrischem Antrieb, wobei die Kälteanlage (10) aufweist:

   einen Kältemittelverdichter (12),
   einen ersten Wärmeübertrager (18), insbesondere Gaskühler oder Kondensator;
   wenigstens einen weiteren Wärmeübertrager (22; 28;26), insbesondere einen Verdampfer (22) oder/und einen Chiller (28) oder/und ein Heizregister (26);
   eine niederdruckseitig stromaufwärts von dem Kältemittelverdichter (12) angeordnete Sensorvorrichtung (pT2) zur Erfassung von einem ersten Kältemitteldruck und/oder einer ersten Kältemitteltemperatur;
   eine hochdruckseitig stromabwärts von dem Kältemittelverdichter (12) angeordnete Sensorvorrichtung (pT1) zur Erfassung von einem zweiten Kältemitteldruck und/oder einer zweiten Kältemitteltemperatur, wobei das Verfahren folgende Schritte aufweist:

   Erfassen (S501) des ersten Kältemitteldrucks oder/und der ersten Kältemitteltemperatur;
   Erfassen (S502) des zweiten Kältemitteldrucks oder/und der zweiten Kältemitteltemperatur;
   Erfassen (S503) einer Drehzahl des Kältemittelverdichters;
   Bestimmen (S504) eines Kältemittelliefergrads basierend auf dem Druckverhältnis von ersten Kältemitteldruck und zweiten Kältemitteldruck und der Drehzahl des Kältemittelverdichters;
   Bestimmen (S505) eines Kältemittelmassenstroms basierend auf dem Kältemittelliefergrad.

2. Verfahren (500) nach Anspruch 1, ferner umfassend den Schritt: Bestimmen (S506) einer niederdruckseitigen Dichte des Kältemittels in einem überhitzten Bereich basierend auf dem zweiten Kältemitteldruck und der zweiten Kältemitteltemperatur.

3. Verfahren (500) nach Anspruch 1 oder 2, ferner umfassend den Schritt: Bestimmen (S507) einer niederdruckseitigen Dichte des Kältemittels in einem Nassdampf-Bereich basierend auf dem zweiten Kältemitteldruck.

4. Verfahren (500) nach einem der vorhergehenden Ansprüche, wobei für jeden Betriebszustand der Kälteanlage, insbesondere Kühlbetrieb, Heizbetrieb, Reheat-Betrieb, ein zugeordneter maximaler Kältemittelmassenstrom verwendet wird und die Drehzahl des Kältemittelverdichter in dem betreffenden Betriebszustand in Abhängigkeit von dem zugeordneten maximalen Kältemittelmassenstrom begrenzt wird (S508).

5. Kälteanlage (10) mit Wärmepumpenfunktion für ein Kraftfahrzeug (200) mit zumindest teilweise elektrischem Antrieb, wobei die Kälteanlage (10) aufweist:

   einen Kältemittelverdichter (12),
   einen ersten Wärmeübertrager (18), insbesondere Gaskühler oder Kondensator;
   wenigstens einen weiteren Wärmeübertrager (22; 28; 26), insbesondere einen Verdampfer (22) oder/und einen Chiller (28) oder/und ein Heizregister (26);
   einer niederdruckseitig stromaufwärts von dem Kältemittelverdichter (12) angeordneten Sensorvorrichtung (pT2) zur Erfassung von einem ersten Kältemitteldruck und/oder einer ersten Kältemitteltemperatur;
   einer hochdruckseitig stromabwärts von dem Kältemittelverdichter (12) angeordneten Sensorvorrichtung (pT1) zur Erfassung von einem zweiten Kältemitteldruck und/oder einer zweiten Kältemitteltemperatur; und
   eine Steuereinheit (50), die dazu eingerichtet ist, das Verfahren (500) gemäß einem der vorhergehenden Ansprüche durchzuführen.

**Fig. 1**

**Fig. 2**

Europäisches
Patentamt

European
Patent Office

Office européen
des brevets

## EUROPÄISCHER RECHERCHENBERICHT

Nummer der Anmeldung

EP 25 19 0055

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 209500 A1 (GM GLOBAL TECH OPERATIONS LLC [US]) 8. Dezember 2016 (2016-12-08) | 1,5 | INV. F25B49/02 |
| A | * Absatz [0007] - Absatz [0024]; Abbildung 1 * ----- | 2-4 | |
| A | DE 11 2008 002404 T5 (SANDEN CORP [JP]) 22. Juli 2010 (2010-07-22) * das ganze Dokument * ----- | 1-5 | |
| A | EP 3 348 932 A1 (PANASONIC IP MAN CO LTD [JP]) 18. Juli 2018 (2018-07-18) * das ganze Dokument * ----- | 1-5 | |

RECHERCHIERTE SACHGEBIETE (IPC)

F25B

Der vorliegende Recherchenbericht wurde für alle Patentansprüche erstellt

| Recherchenort | Abschlußdatum der Recherche | Prüfer |
|---|---|---|
| München | 11. Dezember 2025 | Lucic, Anita |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................
& : Mitglied der gleichen Patentfamilie, übereinstimmendes Dokument

EPO FORM 1503 03.82 (P04C03)

**EP 4 703 659 A1**

## ANHANG ZUM EUROPÄISCHEN RECHERCHENBERICHT
## ÜBER DIE EUROPÄISCHE PATENTANMELDUNG NR.

EP 25 19 0055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2025

| Im Recherchenbericht angeführtes Patentdokument | Datum der Veröffentlichung | Mitglied(er) der Patentfamilie | Datum der Veröffentlichung |
|---|---|---|---|
| DE 102016209500 A1 | 08-12-2016 | CN 106247648 A | 21-12-2016 |
| | | DE 102016209500 A1 | 08-12-2016 |
| | | US 2016356535 A1 | 08-12-2016 |
| DE 112008002404 T5 | 22-07-2010 | CN 101796354 A | 04-08-2010 |
| | | DE 112008002404 T5 | 22-07-2010 |
| | | JP 2009063179 A | 26-03-2009 |
| | | WO 2009031425 A1 | 12-03-2009 |
| EP 3348932 A1 | 18-07-2018 | CN 108317758 A | 24-07-2018 |
| | | EP 3348932 A1 | 18-07-2018 |
| | | JP 6778884 B2 | 04-11-2020 |
| | | JP 2018115773 A | 26-07-2018 |

EPO FORM P0461

Für nähere Einzelheiten zu diesem Anhang : siehe Amtsblatt des Europäischen Patentamts, Nr.12/82

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021132800 A1
- DE 4432272 A1
- DE 102012222594 A1
- DE 102010061465 A1